# EUROPEAN PATENT SPECIFICATION

(11) **EP 4 437 750 B1**
(45) Date of publication and mention of the grant of the patent: **07.05.2025**
(21) Application number: 22783524.6
(22) Date of filing: 06.10.2022
(51) Int. Cl.: H04W 24/02, H04L 41/0806, H04L 41/0893, H04L 41/0896, H04L 41/16, H04L 41/0816

(54) **CLUSTERING OF ACCESS POINTS IN A WIRELESS TELECOMMUNICATIONS NETWORK AND CONFIGURATION OF AN ACCESS POINT IN A CLUSTER**
CLUSTERING VON ZUGANGSPUNKTEN IN EINEM DRAHTLOSEN TELEKOMMUNIKATIONSNETZWERK UND KONFIGURATION EINES ZUGANGSPUNKTS IN EINEM CLUSTER
REGROUPEMENT DE POINTS D'ACCÈS DANS UN RÉSEAU DE TÉLÉCOMMUNICATIONS SANS FIL ET CONFIGURATION D'UN POINT D'ACCÈS DANS UNE GRAPPE

(30) Priority: 26.11.2021 GB 202117099
(43) Date of publication of application: 02.10.2024
(73) Proprietor: British Telecommunications public limited company, London, Greater London E1 8EE (GB)
(72) Inventor: SANMOOGAN, Timothy, London E1 8EE (GB); PAREKH, Arjun, London E1 8EE (GB); REID, Rebecca, London E1 8EE (GB)
(74) Representative: British Telecommunications public limited company Intellectual Property Department
(86) International application number: PCT/EP2022/077779
(87) International publication number: WO 2023/094059

(56) References cited:
- CN-A- 113 159 109
- CN-B- 108 770 002
- ZHONG GANG ET AL: "Characterizing Passenger Flow for a Transportation Hub Based on Mobile Phone Data", IEEE TRANSACTIONS ON INTELLIGENT TRANSPORTATION SYSTEMS, IEEE, PISCATAWAY, NJ, USA, vol. 18, no. 6, 1 June 2017 (2017-06-01), pages 1507 - 1518, XP011650970, ISSN: 1524-9050, [retrieved on 20170526], DOI: 10.1109/TITS.2016.2607760
- TIANTIAN LV CHINA TELECOM CHINA: "Proposed update for Draft M.resm-AI:" Requirements for energy saving management of 5G RAN system with AI";TD-GEN-1031", vol. 5/2, 1 April 2020 (2020-04-01), pages 1 - 16, XP044287892, Retrieved from the Internet <URL:https://www.itu.int/ifa/t/2017/sg2/docs/200527/td/ties/gen/T17-SG02-200527-TD-GEN-1031!!MSW-E.docx> [retrieved on 20200401]
- "Data Study Group Final Report: Telenor. Green Radio: Dynamic power saving configuration for mobile networks", GSM ASSOCIATION, GSM ASSOCIATION, GSMA FLOOR2 THE WALBROOK BUILDING 25 WALLBROOK LONDON, UK, 6 May 2020 (2020-05-06), XP040720515
- BELLINI PIERFRANCESCO ET AL: "Wi-Fi based city users' behaviour analysis for smart city", JOURNAL OF VISUAL LANGUAGES & COMPUTING, vol. 42, 18 August 2017 (2017-08-18), pages 31 - 45, XP085270196, ISSN: 1045-926X, DOI: 10.1016/J.JVLC.2017.08.005
- "3rd Generation Partnership Project; Technical Specification Group Services and System Aspects; Telecommunication management; Study on scenarios for Intent driven management services for mobile networks (Release 17)", vol. SA WG5, no. V17.1.0, 16 December 2020 (2020-12-16), pages 1 - 45, XP051999977, Retrieved from the Internet <URL:https://ftp.3gpp.org/Specs/latest/Rel-17/28_series/28812-h10.zip 28812-h10.doc> [retrieved on 20201216]

## Description

### Field of the Invention

The present invention relates to a method of reconfiguring a wireless telecommunications network.

### Background

A wireless telecommunications network may experience a growth in traffic due to an increase in users and/or an increase in the amount of data consumed by one or more users. To forestall any issues that would otherwise occur if this traffic exceeds the capacity of the network, the network operator may upgrade the network. An upgrade to the network may be to add new transceivers, use new radio resources, use new backhaul resources, use new technologies, use new protocols, and/or add additional processing capacity. The network operator may forecast usage growth in the network and upgrade the network to handle the forecasted usage growth. Growth may be forecast at an access point level such that each access point may be upgraded independently of other access points in the network. If the usage growth of an access point is underestimated, then users of the upgraded access point may experience poor service as the traffic demand exceeds capacity in the upgraded access point. If the usage growth is overestimated, then the network operator has wasted resources on the upgrade that could have otherwise been used to upgrade other access points in the network.

The network operator may determine a growth rate for each access point by reviewing its historical performance data and determining its growth rate. However, this requires significant storage and processing resources when there are many access points in the network. A simplified method of forecasting growth of an access point in the network is to estimate a universal growth rate (e.g. 10%) and apply the universal growth rate to each access point in the network. This universal approach reduces the resources required to determine a growth rate for each access point, but is more likely to underestimate or overestimate the growth rate.

Other network configurations also suffer from the same issue that the network operator must either use significant resources to identify a configuration for each access point based on data for each access point, or apply a universal configuration across a plurality of access points that risks being inappropriate for one of more of those access points.

This may apply to, for example, the network operator determining a time for switching access points to an energy saving mode.

"Characterizing Passenger Flow for a Transportation Hub Based on Mobile Phone Data" Gang Zhong et al., IEEE TRANSACTIONS ON INTELLIGENT TRANSPORTATION SYSTEMS, VOL. 18, NO. 6, JUNE 2017 utilises mobile phone data to characterize the passenger flow of the Hongqiao transportation hub located in Shanghai, China.

3^{rd} Generation Partnership Project Technical Specification Group Services and System Aspects; "Telecommunication management; Study on scenarios for Intent driven management services for mobile networks (Release 17) TR 28.812 V17.1.0 (2020-12) describes intent driven management concept, intent driven management scenarios, and recommendation for the way forward on standardisation expression of the intent in normative phase.

### Summary of the Invention

According to a first aspect of the invention, there is provided a computer-implemented method as claimed in Claim 1.

According to a second aspect of the invention, there is provided a computer-implemented method as claimed in Claim 2.

The step of generating time-series performance data for each cluster of the first plurality of clusters may be based on an average of the time-series performance data for each access point in the cluster.

The configuration may be determined using a machine learning method using the first access point's association with the first cluster of the first plurality of clusters as an input, wherein the machine learning method may be trained on a dataset identifying historical performance data for each cluster of the first plurality of clusters.

The machine learning method may also use one or more of the following as an input: a density of a site associated with the first access point, an average of the performance data in a particular time period, a height of an antenna of the first access point, a set of carriers used by the first access point, and a vendor of the antenna of the first access point, wherein the dataset for training the machine learning method further identifies corresponding historical metrics for each cluster of the first plurality of clusters.

The time-series performance data may include one or more of a measure of connected users and a measure of resource usage.

The time-series performance data may include a plurality of performance metrics, and the dynamic time warping technique may be a multivariate dynamic time warping technique.

The identified configuration may be one or more of: a capacity of the first access point, a handover parameter of the first access point, and an energy saving mode of the first access point

The wireless telecommunications network may be a cellular telecommunications network, and the first access point may be a first sector of a first base station.

According to a third aspect of the invention, there is provided a computer program comprising instructions which, when the program is executed by a computer, cause the computer to carry out the steps of the first or second aspect of the invention. The computer program may be stored on a computer readable carrier medium.

According to a fourth aspect of the invention, there is provided a data processing apparatus comprising a processor adapted to perform the first or second aspect of the invention.

### Brief Description of the Figures

In order that the present invention may be better understood, embodiments thereof will now be described, by way of example only, with reference to the accompanying drawings in which:
Figure 1 is a schematic diagram of a wireless telecommunications network of a first embodiment of the present invention;
Figure 2 is a flow diagram of a first embodiment of a method of the present invention;
Figure 3 is a flow diagram of a second embodiment of a method of the present invention; and
Figure 4 is a flow diagram representing both the first and second embodiments of the present invention.

### Detailed Description of Embodiments

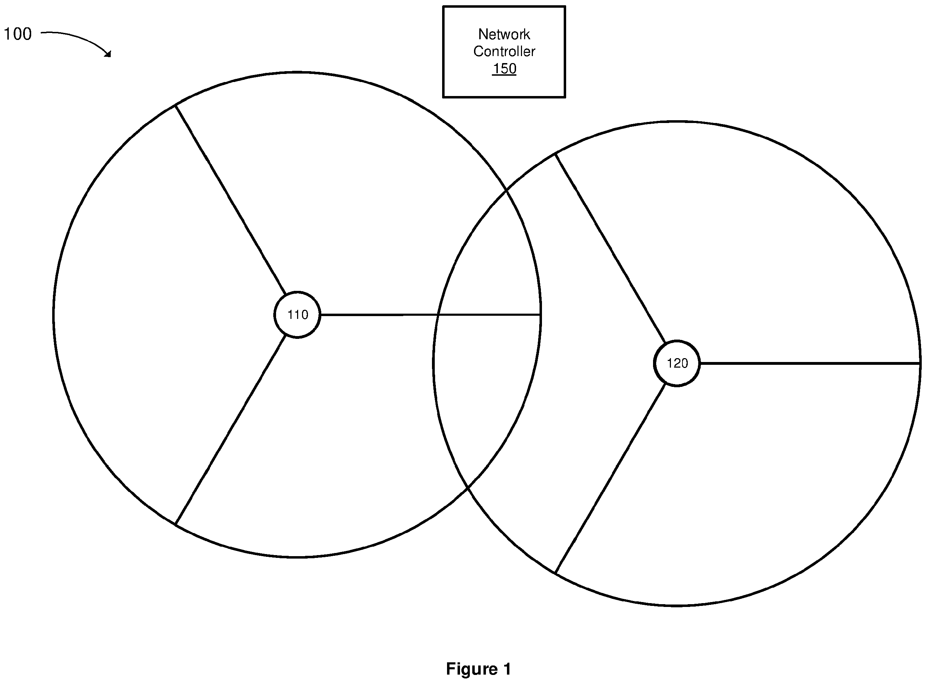

A first embodiment of a wireless telecommunications network 100 will now be described with reference to Figure 1. In this first embodiment, the wireless telecommunications network 100 is a cellular telecommunications network having a first base station 110 located at a first cell site and a second base station 120 located at a second cell site. The first base station 110 and second base station 120 are both tri-sector base stations (i.e. they each have a first sector, second sector and third sector). Each sector of each base station has a distinct coverage area. Furthermore, each sector of each base station may communicate using a single carrier or a plurality of carriers.

Figure 1 also illustrates a controller 150. The controller 150 is configured to receive data from each base station, which in this embodiment includes:
- an average number of users connected to each carrier of each sector of the base station. Each value for the average number of users is associated with a particular point in time (that is, it is timestamped) to indicate the average number of users connected to a particular carrier of a particular sector of a particular base station at that point in time. In this embodiment, each data point is recorded and timestamped at hourly intervals so as to represent the average number of users connected to each carrier of each sector of the base station in that hour. A data set of such values may cover a particular time period, e.g. a particular week, such that each value for the average number of users is for a particular point of time within that time period;
- a density of the cell site where the base station is located (e.g. 'Dense Urban', 'Urban', 'Suburban' and 'Rural") based on proximity of the cell site to its four nearest neighbours;
- Physical Resource Block (PRB) usage data, including a count of PRBs used by each carrier of each sector of the base station in a time period. In this embodiment, the PRB usage data is also recorded and timestamped at hourly intervals so as to represent the count of PRBs used by each carrier of each sector of the base station in that hour. The data set of such values may cover a particular time period (e.g. a year), which may be different from the time period covered by the data set of the average number of users;
- The height of each antenna in each sector of the base station;
- The set of carriers communicated in each sector of the base station; and
- The manufacturer of each antenna of each sector of the base station.

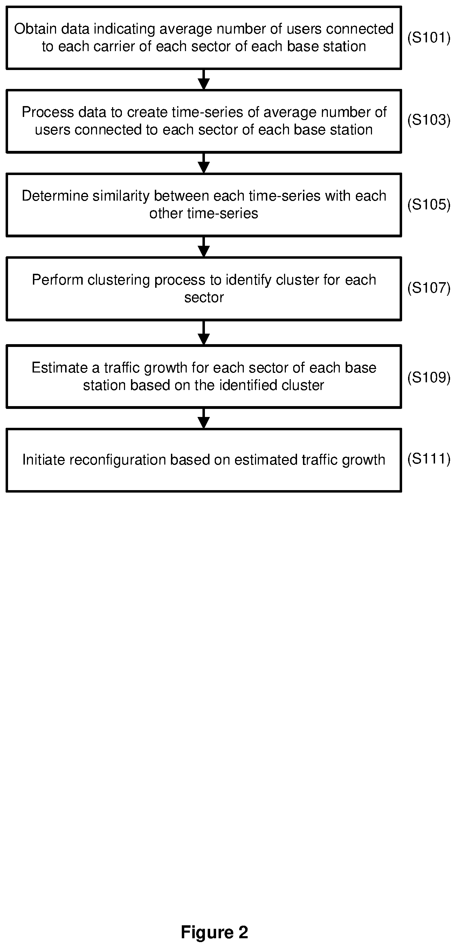

The controller 150 includes a communications interface for receiving this data, memory for storing this data, and a processor for implementing an embodiment of a method of present invention to determine a configuration of each sector of each base station in the network 100 based on the data. The data may be stored in memory with a timestamp indicating the time the data was recorded by the base station. The data may be also be processed, by the processor, to determine new metrics. A first embodiment of the method will now be described with reference to Figure 2.

In a first step (S101) of this first embodiment, the controller 150 obtains data indicating the average number of users connected to each carrier of each sector of each base station for a plurality of points in time (e.g. each hour) for a particular time period (e.g. a day).

In step S103, the controller 150 processes the data to determine the average number of users connected to each sector of each base station at each point in time in the time period. This is achieved by retrieving a value for the average number of connected users of each carrier of a particular sector at a particular point in time (e.g. the values for the average number of users connected to each carrier of a particular sector of a particular base station for 0100 on the first day of the week) and summing those values to determine the average number of users connected to that sector of that base station at that point in time. This is repeated at each point in time for which there are values of the average number of users connected to that sector of that base station. This processed data may then be represented as a vector, *v*, for a particular sector in which each element of the vector is the average number of users connected to that sector at a particular point in time, and the vector covers each point in time between the start of the time period to the end of the time period. This vector may be described as a time-series of the average number of users for a particular sector for a particular base station over a particular time period. This process is repeated for all sectors of all base stations. Accordingly, following this step, the controller 150 obtains a time-series of the average number of users for each sector of each base station over the time period.

In step S105, the controller 150 processes each time-series vector to determine a similarity value with each other time-series vector. This is achieved using a dynamic time-warping technique so as to identify similar time-series pairs that either occur at the same time or are offset in time (in other words, any similar patterns in the two time-series do not necessary have to occur at the same time in order for the two time-series to be identified as similar). In more detail, a first time-series vector, *v₁*, having n time points and a second time-series vector, *v₂*, having m time points are processed to calculate a similarity matrix, S. The similarity matrix is a two-dimensional matrix of size *n*x*m.* Each entry of the similarly matrix, *S*[*i,j*], is calculated by measuring the distance between an *i-*th point in the first time series, *v₁* (in which *i* is a set of 1 to *n*), and a *j*-th point in the second time series, *v₂* (in which *j* is a set of 1 to *m*), and determining the value of *S*[*i*,*j*] as the sum of this distance and the minimum of *S*[*i*-1,*j*], *S*[*i*,*j*-1] and S[*i*-1, *j*-1], such that each entry is monotonically increasing from previous entry of the similarity matrix. A value of similarity between the two vectors is determined as the value of S[n,m]. The following pseudocode includes more detail on the dynamic time-warping method used in this first embodiment:

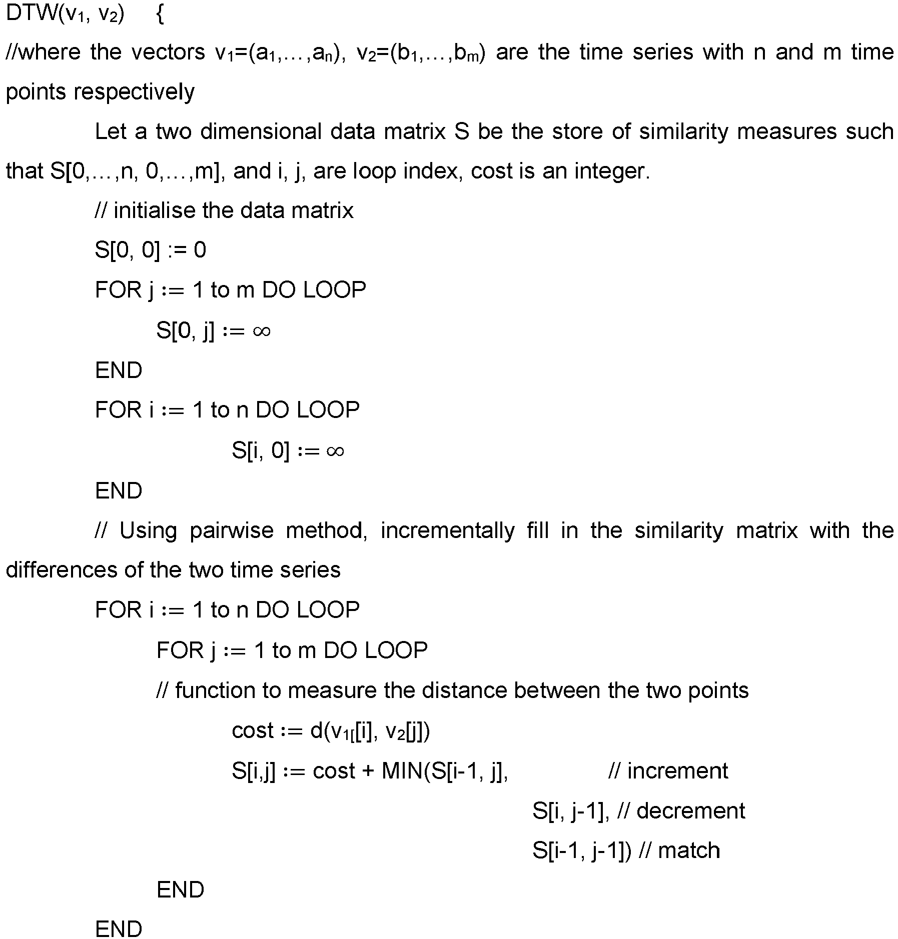

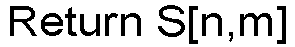

It is noted that this particular time-warping method requires the two time series to both have the same initial time point (that is, a₁ and b₁ occur at the same time) and the same final time point (that is, aₙ and bₘ occur at the same time).

Following step S105, the controller 150 has computed a similarity value between each time-series vector and each other time-series vector. In step S107, the controller 150 performs a clustering process to identify a plurality of time-series clusters, wherein each time-series vector cluster includes one or more time-series vectors. In this embodiment, the clustering process is based on Ward's method, such that a time series vector is clustered with one or more other time-series vectors if their similarity values are sufficiently close (i.e. relative to a threshold). This threshold may be varied to change the number of clusters resulting from the clustering process. In one implementation, an operator may supervise the clustering process and set the threshold such that the resulting clusters are representative of particular use cases. In another implementation, the threshold may be calculated so as to identify a specific number of clusters.

In this embodiment, the clustering process is implemented using the scipy.cluster.hierarchy.ward function of the Python programming language, as detailed in https://docs.scipy.org/doc/scipy/reference/generated/scipy.cluster.hierarchy.ward.html. Each cluster is identified by a cluster identifier.

Following step S107, the controller 150 has identified a cluster for each time-series vector (relating to a particular sector of a base station). In step S109, the controller 150 estimates a traffic growth rate for each sector of each base station in the network based on the identified cluster. In this embodiment, the growth rate for a sector is based on a function that uses the following inputs (collected in step S101):
- The cluster identifier for the sector;
- The maximum PRB usage for the previous calendar year for the sector (being a maximum of the sum of PRB usage for each carrier of that sector);
- The mean PRB usage in the January of the current calendar year for the sector (being a mean of the sum of the PRB usage in January for each carrier of that sector);
- a density of the cell site where the base station of that sector is located (e.g. 'Dense Urban', 'Urban', 'Suburban' and 'Rural");
- The height of the sector's antenna;
- The set of carriers communicated by that sector; and
- The manufacturer of the sector's antenna.

This function is developed using a supervised machine learning model, such as a decision tree, based on a labelled training dataset (mapping between these inputs for a particular sector and the known growth rate for that sector). The trained decision tree may also be applied to a further testing dataset and reviewed to determine whether the function is outputting accurate growth rates for each sector in the testing dataset. The decision tree may be retrained one or more times following review of the output growth rates when applied to the testing dataset. The trained and tested function may also be applied to a validation dataset as a final test to ensure the function is performing as intended. The function may then be used in step S109 to estimate a traffic growth rate for each sector of each base station in the network based on the identified cluster.

In step S111, the controller 150 causes a reconfiguration of the network based on the estimated traffic growth rate for each sector of each base station in the network. This reconfiguration may be to upgrade the capacity of each sector such that each sector can handle the amount of additional traffic expected before the next upgrade (the additional traffic being the growth rate multiplied by the time until the next upgrade). The reconfiguration may also be timed such that the upgrade is performed before the traffic increases above the sector's current capacity.

The above embodiment provides the benefit of calculating a growth forecast that is based on behavioural trends. That is, by identifying that a particular sector of a base station is a member of a particular cluster, then the growth forecast may be based on a traffic growth trend for that cluster. For example, if the sector of a base station is clustered with other sectors that primarily serve office worker customers, then the growth forecast may be based on the expected growth in traffic for such customers. Accordingly, changes in behaviour experienced by some sectors in a cluster may alter the growth rate predictions of other sectors in the cluster, even if those other sectors have not yet experienced those behavioural trends. These predictions based on the cluster identifier are therefore more accurate and responsive than existing methods that apply a universal growth rate to each sector.

Another benefit of upgrading a sector based on its cluster identifier is that the upgrade may be suitable for customers associated with that cluster. For example, if a sector is clustered with other sectors that primarily serve commuters, then the sector may be upgraded to increase its range by using a lower frequency transceiver (reducing the likelihood of users served by that sector being handed over). Conversely, if a sector is clustered with other sectors that primarily serve stationary customers (e.g. suburban or busines park customers), then the sector may be upgraded to increase its throughput by using a higher frequency transceiver.

Furthermore, this clustering is performed based on similarities between time-series vectors that do not necessary have to occur at the same time in order for the two time-series to be identified as similar. This allows for time-series that have similar trends that are offset in time to be determined as similar, increasing the likelihood that those time-series vectors are associated with an appropriate cluster.

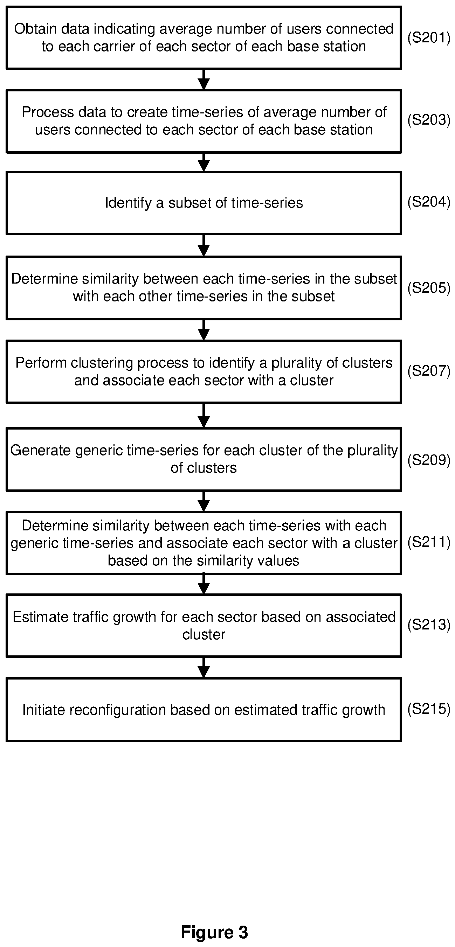

In the above embodiment, a similarity value is calculated between each time-series vector and each other time-series vector. However, as the number of time-series vectors increases, the computational resources requirement may exceed the computational resources of the controller 150. This is addressed in the following second embodiment (illustrated in Figure 3).

In a first step (S201) of this second embodiment, the controller 150 obtains data indicating the average number of users connected to each carrier of each sector of each base station for a plurality of points in time (e.g. each hour) for a particular time period (e.g. a day). In step S203, the controller 150 processes the data to obtain a set of time-series vectors, each representing the average number of users for a particular sector of a particular base station over the time period.

In step S204, the controller 150 identifies a subset of time-series vectors from the set of time-series vectors. The subset of time-series vectors is selected such that a count of time-series vectors in the subset can be processed in step S205 in less than a threshold time (set by the operator based on their computational resources). In step S205, the controller 150 processes each time-series vector in the subset of time-series vectors to determine a similarity value with each other time-series vector in the subset of time-series vectors. Step S205 of this second embodiment uses the same dynamic time-warping technique as detailed in step S105 of the above first embodiment. Once these similarity values have been calculated, the controller 150 performs (in step S207) a clustering process to identify a plurality of time-series clusters, wherein each time-series vector cluster includes one or more time-series vectors of the subset of time-series vectors. Step S207 of this second embodiment also uses Ward's method to perform this clustering, as discussed in step S107 of the above first embodiment. Following step S207, the controller 150 has identified a cluster for each time-series vector in the subset of time-series vectors (relating to a particular sector of a base station). Each cluster is associated with a cluster identifier.

In step S209, the controller 150 creates a generic time-series vector for each cluster of the plurality of time-series clusters. A generic time-series vector for a time-series cluster is based on all time-series vector members of that time-series cluster. Each element of the generic time-series vector is an average of the corresponding element of each time-series vector, in which each element of the generic time-series vector and the corresponding element of each time-series vector in the time-series cluster relate to the same point in time. The generic time-series vector of a time-series cluster is therefore an average of the time-series vectors in that time-series cluster.

In step S211, the controller 150 processes each time-series vector in the set of time-series vectors (that is, all time-series vectors computed in step S203) to determine a similarity value with the generic time-series vectors of each time-series cluster. This is also performed using the same dynamic time-warping technique as detailed in step S105 in the above first embodiment. The controller 150 associates each time-series vector in the set of time-series vectors with a cluster identifier based on these similarity values. In this embodiment, this association is such that each time-series vector in the set of time-series vectors is associated with the cluster identifier of the time-series cluster with which it has the greatest similarity value.

In step S213, the controller 150 estimates a traffic growth for each sector of each base station in the network based on the identified cluster. This is carried out using the same technique detailed in step S109 above. In step S215, the controller 150 initiates a reconfiguration in the network based on the estimated traffic growth.

In the above embodiments, the cluster identifier for a sector is used alongside PRB usage data to determine a suitable upgrade for that sector (based on its estimated growth) and when that upgrade should be carried out. It is non-essential that a performance metric is used alongside the cluster identifier in the machine learning algorithm to determine the suitable network reconfiguration. If a performance metric is used, then it is also non-essential that it represents PRB usage (and alternatively or additionally may represent data throughput or count of connected users). Furthermore, the cluster identifier may be used for other network configurations. For example, if the sector is a member of cluster which is characterised by very low utilisation during a particular time period, then the network operator may apply a reconfiguration of that sector at that time period (such as a switch to an energy saving mode) or apply a physical operation during that time period (such as to upgrade the sector). In another example, if the sector is a member of a cluster which is characterised by commuter traffic, then the network operator may apply a reconfiguration to alter handover parameters so that users are handed over less frequently.

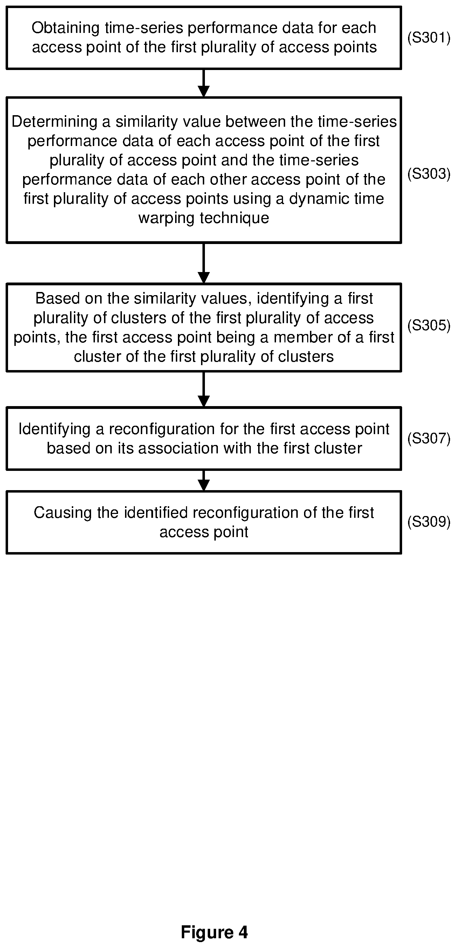

Furthermore, in the above embodiments, the similarity calculation is performed on time-series vectors for the average number of connected users. The skilled person will understand that the average number of connected users is just one example metric and other metrics may be used (so long as they are associated with a point in time such that a time-series of the metric can be created), such as data throughput or physical resource block usage. Accordingly, the present invention may be represented by the flow diagram of Figure 4, which includes the steps of: obtaining time-series performance data for each access point of the first plurality of access points (step S301); determining a similarity value between the time-series performance data of each access point of the first plurality of access point and the time-series performance data of each other access point of the first plurality of access points using a dynamic time warping technique (step S303); based on the similarity values, identifying a first plurality of clusters of the first plurality of access points, the first access point being a member of a first cluster of the first plurality of clusters (step S305); identifying a reconfiguration for the first access point based on its association with the first cluster (step S307); and causing the identified reconfiguration of the first access point (step S309).

In a further enhancement to the above first and second embodiments, a plurality of metrics may be used in the similarity calculation using a multivariate dynamic time warping technique. This may be achieved by either 1) obtaining a time-series for each metric and performing dynamic time warping between each pair of time-series for each metric (i.e. independent multivariate dynamic time warping), and summing the similarity values, or 2) obtaining a time-series representing a plurality of metrics and performing dynamic time warping between each pair of multivariate time-series (in which points are aligned in a multi-dimensional matrix). Once a similarity value has been computed between each pair of sectors having multivariate time-series, the process may then continue to cluster the sectors, and determine a network configuration for a sector based on its cluster, as described above in the first and second embodiments. Principal Component Analysis (PCA) may be applied to the multivariate time-series to reduce the number of input variables whilst retaining a significant amount of the information. The output of the PCA may be used as input in the dynamic time warping technique.

In the above embodiments, each sector of a base station is considered as an individual access point and a growth forecast is predicted for that access point. However, the skilled person will realise that the growth forecast may be considered for a single base station. Furthermore, the skilled person will understand that the present invention is not limited to cellular telecommunications networks. That is, it may be applied to any wireless telecommunications network having a plurality of access points.

The skilled person will understand that any combination of features is possible within the scope of the invention as claimed.

## Claims

1. A computer-implemented method of configuring a first access point in a wireless telecommunications network (100), the first access point being one of a first plurality of access points in the wireless telecommunications network (100), the method comprising the steps of:
obtaining time-series performance data for each access point of the first plurality of access points;
determining a similarity value between the time-series performance data of each access point of the first plurality of access points and the time-series performance data of each other access point of the first plurality of access points using a dynamic time warping technique;
based on the similarity values, identifying a first plurality of clusters of the first plurality of access points;
identifying a configuration for the first access point based on an association of the first access point with a first cluster of the plurality of clusters; and
causing the first access point to implement the identified configuration.

2. A computer-implemented method of configuring a first access point in a wireless telecommunications network (100), the wireless telecommunications network (100) comprising a first plurality of access points and a second plurality of access points, the first access point being one of the first plurality of access points in the wireless telecommunications network (100), the method comprising the steps of:
obtaining time-series performance data for each access point of the second plurality of access points;
determining a similarity value between the time-series performance data of each access point of the second plurality of access points and the time-series performance data of each other access point of the second plurality of access points using a dynamic time warping technique;
based on the similarity values, identifying a first plurality of clusters of the second plurality of access points:
generating time-series performance data for each cluster of the first plurality of clusters;
determining a similarity value between the time-series performance data for each access point of the first plurality of access points and the generated time-series performance data for each cluster of the first plurality of clusters;
associating each access point of the first plurality of access points with a first cluster of the first plurality of clusters based on the determined similarity value;
identifying a configuration for the first access point based on an association of the first access point with the first cluster of the plurality of clusters; and
causing the first access point to implement the identified configuration.

3. A computer-implemented method as claimed in Claim 2, wherein the step of generating time-series performance data for each cluster of the first plurality of clusters is based on an average of the time-series performance data for each access point in the cluster.

4. A computer-implemented method as claimed in any one of the preceding claims, wherein the configuration is determined using a machine learning method using the first access point's association with the first cluster of the first plurality of clusters as an input, wherein the machine learning method is trained on a dataset identifying historical performance data for each cluster of the first plurality of clusters.

5. A computer-implemented method as claimed in Claim 4, wherein the machine learning method also uses one or more of the following as an input: a density of a site associated with the first access point, an average of the performance data in a particular time period, a height of an antenna of the first access point, a set of carriers used by the first access point, and a vendor of the antenna of the first access point, wherein the dataset for training the machine learning method further identifies corresponding historical metrics for each cluster of the first plurality of clusters.

6. A computer-implemented method as claimed in any one of the preceding claims, wherein the time-series performance data includes one or more of a measure of connected users and a measure of resource usage.

7. A computer-implemented method as claimed in any one of the preceding claims, wherein the time-series performance data includes a plurality of performance metrics, and the dynamic time warping technique is a multivariate dynamic time warping technique.

8. A computer-implemented method as claimed in any one of the preceding claims, wherein the identified configuration is one or more of: a capacity of the first access point, a handover parameter of the first access point, and an energy saving mode of the first access point

9. A computer-implemented method as claimed in any one of the preceding claims, wherein the wireless telecommunications network (100) is a cellular telecommunications network.

10. A computer-implemented method as claimed in Claim 9, wherein the first access point is a first sector of a first base station.

11. A computer program comprising instructions which, when the program is executed by a computer, cause the computer to carry out the steps of any one of Claims 1 to 10.

12. A computer readable carrier medium comprising the computer program of Claim 11.

13. A data processing apparatus comprising a processor adapted to perform the steps of any one of Claims 1 to 10.

## Patentansprüche

1. Computerimplementiertes Verfahren zum Konfigurieren eines ersten Zugangspunkts in einem drahtlosen Telekommunikationsnetz (100), wobei der erste Zugangspunkt einer von mehreren ersten Zugangspunkten in dem drahtlosen Telekommunikationsnetz (100) ist, wobei das Verfahren die folgenden Schritte umfasst:
Erhalten von Zeitreihenleistungsdaten für jeden Zugangspunkt der mehreren ersten Zugangspunkte;
Bestimmen eines Ähnlichkeitswerts zwischen den Zeitreihenleistungsdaten jedes Zugangspunkts der mehreren ersten Zugangspunkte und der Zeitreihenleistungsdaten jedes anderen Zugangspunkts der mehreren ersten Zugangspunkte unter Verwendung einer dynamischen Zeitverzerrungstechnik;
Identifizieren anhand der Ähnlichkeitswerte mehrerer erster Cluster der mehreren ersten Zugangspunkte;
Identifizieren einer Konfiguration für den ersten Zugangspunkt anhand einer Zuordnung des ersten Zugangspunkts zu einem ersten Cluster der mehreren Cluster; und
Veranlassen, dass der erste Zugangspunkt die identifizierte Konfiguration implementiert.

2. Computerimplementiertes Verfahren zum Konfigurieren eines ersten Zugangspunkts in einem drahtlosen Telekommunikationsnetz (100), wobei das drahtlose Telekommunikationsnetz (100) mehrere erste Zugangspunkte und mehrere zweite Zugangspunkte umfasst, wobei der erste Zugangspunkt einer der mehreren ersten Zugangspunkte in dem drahtlosen Telekommunikationsnetz (100) ist, wobei das Verfahren die folgenden Schritte umfasst:
Erhalten von Zeitreihenleistungsdaten für jeden Zugangspunkt der mehreren zweiten Zugangspunkte;
Bestimmen eines Ähnlichkeitswerts zwischen den Zeitreihenleistungsdaten jedes Zugangspunkts der mehreren zweiten Zugangspunkte und der Zeitreihenleistungsdaten jedes anderen Zugangspunkts der mehreren zweiten Zugangspunkte unter Verwendung einer dynamischen Zeitverzerrungstechnik;
anhand der Ähnlichkeitswerte Identifizieren mehrerer erster Cluster der mehreren zweiten Zugangspunkte:
Erzeugen von Zeitreihenleistungsdaten für jeden Cluster der mehreren ersten Cluster;
Bestimmen eines Ähnlichkeitswerts zwischen den Zeitreihenleistungsdaten für jeden Zugangspunkt der mehreren ersten Zugangspunkte und den erzeugten Zeitreihenleistungsdaten für jeden Cluster der mehreren ersten Cluster;
Zuordnen jedes Zugangspunkts der mehreren ersten Zugangspunkte zu einem ersten Cluster der mehreren ersten Cluster anhand des bestimmten Ähnlichkeitswerts;
Identifizieren einer Konfiguration für den ersten Zugangspunkt anhand einer Zuordnung des ersten Zugangspunkts zu dem ersten Cluster der mehreren Cluster; und
Veranlassen, dass der erste Zugangspunkt die identifizierte Konfiguration implementiert.

3. Computerimplementiertes Verfahren nach Anspruch 2, wobei der Schritt des Erzeugens von Zeitreihenleistungsdaten für jeden Cluster der mehreren ersten Cluster auf einem Mittelwert der Zeitreihenleistungsdaten für jeden Zugangspunkt in dem Cluster beruht.

4. Computerimplementiertes Verfahren nach einem der vorhergehenden Ansprüche, wobei die Konfiguration unter Verwendung eines Maschinenlernverfahrens unter Verwendung der Zuordnung des ersten Zugangspunkts zu dem ersten Cluster der mehreren ersten Cluster als Eingabe bestimmt wird, wobei das Maschinenlernverfahren an einer Datengruppe, die historische Leistungsdaten für jeden Cluster der mehreren ersten Cluster identifiziert, geschult wird.

5. Computerimplementiertes Verfahren nach Anspruch 4, wobei das Maschinenlernverfahren außerdem eines oder mehrere des Folgenden als eine Eingabe verwendet: eine Dichte eines Orts, der dem ersten Zugangspunkt zugeordnet ist, einen Mittelwert der Leistungsdaten in einer bestimmten Zeitperiode, eine Höhe einer Antenne des ersten Zugangspunkts, eine Gruppe von Trägern, die von dem ersten Zugangspunkt verwendet werden, und einen Verkäufer der Antenne des ersten Zugangspunkts, wobei die Datengruppe zum Schulen des Maschinenlernverfahrens ferner entsprechende historische Metriken für jeden Cluster der mehreren ersten Cluster identifiziert.

6. Computerimplementiertes Verfahren nach einem der vorhergehenden Ansprüche, wobei die Zeitreihenleistungsdaten ein Maß von angeschlossenen Anwendern und/oder ein Maß einer Betriebsmittelverwendung enthalten.

7. Computerimplementiertes Verfahren nach einem der vorhergehenden Ansprüche, wobei die Zeitreihenleistungsdaten mehrere Leistungsmetriken enthalten und die dynamische Zeitverzerrungstechnik eine multivariate dynamische Zeitverzerrungstechnik ist.

8. Computerimplementiertes Verfahren nach einem der vorhergehenden Ansprüche, wobei die identifizierte Konfiguration eines oder mehrere ist von: einer Kapazität des ersten Zugangspunkts, eines Übergabeparameters des ersten Zugangspunkts und einer Energiesparbetriebsart des ersten Zugangspunkts.

9. Computerimplementiertes Verfahren nach einem der vorhergehenden Ansprüche, wobei das drahtlose Telekommunikationsnetz (100) ein zellulares Telekommunikationsnetz ist.

10. Computerimplementiertes Verfahren nach Anspruch 9, wobei der erste Zugangspunkt ein erster Sektor einer ersten Basisstation ist.

11. Computerprogramm, das Anweisungen umfasst, die dann, wenn das Programm durch einen Computer ausgeführt wird, veranlassen, dass der Computer die Schritte nach einem der Ansprüche 1 bis 10 ausführt.

12. Computerlesbares Trägermedium, das das Computerprogramm nach Anspruch 11 enthält.

13. Datenverarbeitungsvorrichtung, die einen Prozessor umfasst, der ausgelegt ist, die Schritte nach einem der Ansprüche 1 bis 10 auszuführen.

## Revendications

1. Procédé mis en œuvre par ordinateur pour configurer un premier point d'accès dans un réseau de télécommunication sans fil (100), le premier point d'accès étant l'un d'une première pluralité de points d'accès dans le réseau de télécommunication sans fil (100), le procédé comprenant les étapes suivantes :
obtenir des données de performance de séries chronologiques pour chaque point d'accès de la première pluralité de points d'accès ;
déterminer une valeur de similarité entre les données de performance de séries chronologiques de chaque point d'accès de la première pluralité de points d'accès et les données de performance de séries chronologiques de chaque autre point d'accès de la première pluralité de points d'accès en utilisant une technique de déformation temporelle dynamique ;
sur la base des valeurs de similarité, identifier une première pluralité de groupes de la première pluralité de points d'accès ;
identifier une configuration pour le premier point d'accès sur la base d'une association du premier point d'accès avec un premier groupe de la pluralité de groupes ; et
amener le premier point d'accès à mettre en œuvre la configuration identifiée.

2. Procédé mis en œuvre par ordinateur pour configurer un premier point d'accès dans un réseau de télécommunication sans fil (100), le réseau de télécommunication sans fil (100) comprenant une première pluralité de points d'accès et une deuxième pluralité de points d'accès, le premier point d'accès étant l'un de la première pluralité de points d'accès dans le réseau de télécommunication sans fil (100), le procédé comprenant les étapes suivantes :
obtenir des données de performance de séries chronologiques pour chaque point d'accès de la deuxième pluralité de points d'accès ;
déterminer une valeur de similarité entre les données de performance de séries chronologiques de chaque point d'accès de la deuxième pluralité de points d'accès et les données de performance de séries chronologiques de chaque autre point d'accès de la deuxième pluralité de points d'accès en utilisant une technique de déformation temporelle dynamique ;
sur la base des valeurs de similarité, identifier une première pluralité de groupes de la deuxième pluralité de points d'accès ;
générer des données de performance de séries chronologiques pour chaque groupe de la première pluralité de groupes ;
déterminer une valeur de similarité entre les données de performance de séries chronologiques pour chaque point d'accès de la première pluralité de points d'accès et les données de performance de séries chronologiques générées pour chaque groupe de la première pluralité de groupes ;
associer chaque point d'accès de la première pluralité de points d'accès à un premier groupe de la première pluralité de groupes sur la base de la valeur de similarité déterminée ;
identifier une configuration pour le premier point d'accès sur la base d'une association du premier point d'accès avec le premier groupe de la pluralité de groupes ; et
amener le premier point d'accès à mettre en œuvre la configuration identifiée.

3. Procédé mis en œuvre par ordinateur selon la revendication 2, dans lequel l'étape de génération de données de performance de séries chronologiques pour chaque groupe de la première pluralité de groupes est basée sur une moyenne des données de performance de séries chronologiques pour chaque point d'accès dans le groupe.

4. Procédé mis en œuvre par ordinateur selon l'une quelconque des revendications précédentes, dans lequel la configuration est déterminée à l'aide d'un procédé d'apprentissage automatique utilisant l'association du premier point d'accès avec le premier groupe de la première pluralité de groupes en entrée, où le procédé d'apprentissage automatique est entraîné sur un ensemble de données identifiant les données de performance historiques pour chaque groupe de la première pluralité de groupes.

5. Procédé mis en œuvre par ordinateur selon la revendication 4, dans lequel le procédé d'apprentissage automatique utilise également en entrée un ou plusieurs des éléments suivants : la densité d'un site associé au premier point d'accès, une moyenne des données de performance sur une période donnée, une hauteur d'antenne du premier point d'accès, un ensemble de porteuses utilisées par le premier point d'accès et un fournisseur de l'antenne du premier point d'accès, où l'ensemble de données pour l'apprentissage du procédé d'apprentissage automatique identifie en outre les mesures historiques correspondantes pour chaque groupe de la première pluralité de groupes.

6. Procédé mis en œuvre par ordinateur selon l'une quelconque des revendications précédentes, dans lequel les données de performance de séries chronologiques comprennent une ou plusieurs mesures parmi une mesure des utilisateurs connectés et une mesure de l'utilisation des ressources.

7. Procédé mis en œuvre par ordinateur selon l'une quelconque des revendications précédentes, dans lequel les données de performance de séries chronologiques comprennent une pluralité de mesures de performance, et la technique de déformation temporelle dynamique est une technique de déformation temporelle dynamique multivariée.

8. Procédé mis en œuvre par ordinateur selon l'une quelconque des revendications précédentes, dans lequel la configuration identifiée est une ou plusieurs des configurations suivantes : une capacité du premier point d'accès, un paramètre de transfert du premier point d'accès et un mode d'économie d'énergie du premier point d'accès.

9. Procédé mis en œuvre par ordinateur selon l'une quelconque des revendications précédentes, dans lequel le réseau de télécommunication sans fil (100) est un réseau de télécommunication cellulaire.

10. Procédé mis en œuvre par ordinateur selon la revendication 9, dans lequel le premier point d'accès est un premier secteur d'une première station de base.

11. Programme d'ordinateur comprenant des instructions qui, à l'exécution du programme par un ordinateur, amènent l'ordinateur à exécuter les étapes selon l'une quelconque des revendications 1 à 10.

12. Support lisible par ordinateur comprenant le programme d'ordinateur selon la revendication 11.

13. Appareil de traitement de données comprenant un processeur adapté pour exécuter les étapes de l'une quelconque des revendications 1 à 10.
